# EUROPÄISCHE PATENTSCHRIFT

(11) **EP 3 584 365 B1**
(45) Veröffentlichungstag und Bekanntmachung des Hinweises auf die Patenterteilung: **13.07.2022**
(21) Anmeldenummer: 18178899.3
(22) Anmeldetag: 20.06.2018
(51) Int. Cl.: D21H 19/18, D21H 19/20, D21H 19/22, D21H 21/16, D21H 21/20, B65D 65/42

(54) **BESCHICHTETE PAPIERBAHN, VERFAHREN ZUR HERSTELLUNG DER BESCHICHTETEN PAPIERBAHN, BEUTEL ODER TASCHE AUS DER BESCHICHTETEN PAPIERBAHN UND VERWENDUNG DES BEUTELS ODER DER TASCHE**
COATED PAPER SHEET, METHOD FOR PRODUCING THE COATED PAPER SHEET, SACK OR BAG MADE FROM THE COATED PAPER SHEET AND USE OF THE SACK OR BAG
BANDE DE PAPIER REVÊTUE, PROCÉDÉ DE FABRICATION DE BANDE DE PAPIER REVÊTUE, SACHET OU SAC DE BANDE DE PAPIER REVÊTUE ET UTILISATION DU SACHET OU DU SAC

(43) Veröffentlichungstag der Anmeldung: 25.12.2019
(73) Patentinhaber: Papier-Mettler KG, 54497 Morbach (DE)
(72) Erfinder: BUDDAY, Christian, 54292 Trier (DE); SCHNEIDER, Dirk, 56412 Görgeshausen (DE)
(74) Vertreter: Metten, Karl-Heinz

(56) Entgegenhaltungen:
- EP-A1- 3 275 952
- WO-A1-98/53141
- DE-A1- 3 610 732
- DE-A1- 4 200 017
- DE-B- 1 197 230

## Beschreibung

Die vorliegende Erfindung betrifft eine mit einer wässrigen Papierbeschichtungszusammensetzung beschichtete Papierbahn. Ferner betrifft die Erfindung ein Verfahren zur Herstellung der beschichteten Papierbahn sowie einen Beutel oder eine Tasche erhalten aus dieser beschichteten Papierbahn. Schließlich betrifft die Erfindung die Verwendung des Beutels oder der Tasche als kompostierbarer Müllbeutel bzw. als kompostierbare Mülltasche.

Kompostierbare Abfälle, wie sie im Haushalt üblicherweise anfallen, werden, wenn sie separat gesammelt werden, nicht selten zunächst in flüssigkeitsdichte Kunststoffbeutel oder - tragetaschen überführt. Derart befüllte Beutel können dann für den Transport zu einem Komposthaufen oder einer sogenannten Biotonne genutzt werden. Da beim Sammeln von kompostierbaren Hausabfällen regelmäßig auch größere Mengen an Feuchtigkeit anfallen, führt die Verwendung undichter Sammelbehältnisse nicht selten zu Verunreinigungen und Beschädigungen von zum Beispiel Schränken und Haushaltsgegenständen. Auch geht mit derartigen, ein undichtes Gebinde verlassenden Feuchtespuren zum Beispiel auch die Gefahr verstärkter Schimmelbildung einher.

Die WO 98/53141 A1 betrifft ein beschichtetes Papierprodukt, umfassend eine Papierschicht und eine Polymerschicht, wobei die Polymerschicht eine Polylactidpolymerzusammensetzung mit einem Verhältnis von Mz (Zentrifugenmittel) zu Mn (zahlenmittleres Molekulargewicht) von mehr als etwa 6 aufzuweisen hat. Die derart beschichteten Papierprodukte sollen recycelfähig sein und gleichwohl klare bzw. glänzende Beschichtungen liefern.

Die DE 36 10 732 A1 stellt ab auf wässrige, übliche Additive enthaltende Zweikomponentenklarlacke zur einschichtigen Beschichtung von Finish-Folien und Endloskanten. Diese Lacke sollen als erste Komponente (Komponente (A)) 0,1 bis 15 Gew.-%, bezogen auf das Gesamtgewicht der Komponente (A), an einer geblockten Säure als potentiellem Härtungskatalysator und 50 bis 95 Gew.-%, bezogen auf das Gesamtgewicht der Komponente (A), an einer wässrigen Dispersion eines selbstvernetzenden Polyacrylatharzes enthalten, wobei das Polyacrylatharz als die die Selbstvernetzung ermöglichende Gruppe Säureamidderivatgruppen enthält mit der allgemeinen Strukturformel - CO-N(R1)-CH(R2)-OR3, wobei R1 = H-Atom oder eine -CH(R2)-OR3-Gruppe, R2 = H-Atom oder eine -COOR4-Gruppe, R3 = H-Atom oder ein 1 bis 10 C-Atome enthaltender Kohlenwasserstoffrest, R4 = Alkylrest mit 1 bis 5 C-Atomen darstellen. Als zweite Komponente (Komponente B)) haben diese Lacke 20 bis 98 Gew.-%, bezogen auf das Gesamtgewicht der Komponente (B) eines in einem wässrigen Medium dispergierten oder gelösten Melaminharzes oder gelösten Melamin-/Harnstoffharzgemisches zu enthalten. Ferner haben gemäß der DE 36 10 732 A1 die Komponenten (A) und (B) vor der Applikation in einem solchen Verhältnis gemischt zu werden, dass auf ein Gewichtsteil selbstvernetzendes Polyacrylatharz 0,35 bis 0,75 Gewichtsteile Melaminharz oder 0,3 bis 1,5 Gewichtsteile Melamin-/Harnstoffharzgemisch kommen. Diese Zusammensetzungen sollen wässrige Klarlacke zur einschichtigen Beschichtung von Finish-Folien und Endloskanten liefern.

Es wäre daher wünschenswert, kompostierbare Abfälle in einer Weise sicher sammeln und transportieren zu können, ohne auf Kunststoffbeutel angewiesen zu sein.

Daher lag der vorliegenden Erfindung die Aufgabe zu Grunde, Mittel zum Sammeln und zum Transport von kompostierbaren Abfällen, insbesondere Haushaltsabfällen, zur Verfügung zu stellen, die nicht mehr mit den Mängeln der Gebinde des Stands der Technik behaftet sind und die insbesondere eine sichere Handhabung gewährleisten, ohne auf Kunststoffbeutel angewiesen zu sein.

Demgemäß wurde eine mit einer wässrigen Papierbeschichtungszusammensetzung beschichtete Papierbahn gemäß den Merkmalen des Patentanspruchs 1 gefunden. Die wässrige Papierbeschichtungszusammensetzung enthält a) mindestens ein Bindemittel auf der Basis einer wässrigen Polymerdispersion, b) mindestens einen oxidierten Polyethylenwachs, bei dem es sich insbesondere um einen oxidierten HD-Polyethylenwachs handelt, und c) mindestens einen Entschäumer.

Besonders bevorzugte wässrige Papierbeschichtungszusammensetzungen enthalten ferner d) mindestens eine, insbesondere bei 20 °C, d.h. bei Raumtemperatur, flüchtige Base, e) mindestens ein Netz- und/oder Dispergiermittel, f) mindestens ein Konservierungsmittel und/oder g) mindestens ein Additiv sowie gegebenenfalls h) mindestens ein Pigment und/oder einen Füllstoff.

Besonders zweckmäßig sind hierbei solche Zusammensetzungen, enthaltend 25 bis 55 Gew.-%, bevorzugt 30 bis 45 Gew.-% an Komponente a), bezogen auf den Feststoffanteil, 0,5 bis 10 Gew.-%, bevorzugt 1,0 bis 6,5 Gew.-% an Komponente b), bezogen auf den wasser- und lösemittelfreien Wirkstoffanteil, 0,005 bis 3,0 Gew.-%, bevorzugt 0,01 bis 2,0 Gew.-%, an Komponente c), bezogen auf den wasser- und lösemittelfreien Wirkstoffanteil, 0,001 bis 4 Gew.-%, bevorzugt 0,005 bis 3 Gew.-%, an Komponente d), bezogen auf den Feststoffanteil bzw. auf den wasser- und lösemittelfreien Wirkstoffanteil, 0,1 bis 4,0 Gew.-%, bevorzugt 0,25 bis 3,0 Gew.-%, an Komponente e), bezogen auf den Feststoffanteil bzw. auf den wasser- und lösemittelfreien Wirkstoffanteil, 0,0005 bis 0,1 Gew.-%, bevorzugt 0,001 bis 0,05 Gew.-%, an Komponente f), bezogen auf den Feststoffanteil bzw. auf den wasser- und lösemittelfreien Wirkstoffanteil, 0,05 bis 8 Gew.-%, bevorzugt 0,1 bis 6 Gew.-%, an Komponente g), bezogen auf den Feststoffanteil bzw. auf den wasser- und lösemittelfreien Wirkstoffanteil, 0 bis 25% Gew. %, bevorzugt 1 bis 15 Gew. %, an Komponente h), bezogen auf den Feststoffanteil, und/oder 30 bis bis 80 Gew.-%, bevorzugt 40 bis 70 Gew.-%, an Wasser, wobei die prozentualen Gewichtsanteile der Komponenten sich auf das Gesamtgewicht der Zusammensetzung beziehen und wobei die die Zusammensetzung bildenden Komponenten, einschließlich Wasser, sich stets zu 100,00 Gew.-% addieren. Es hat sich überraschend gezeigt, dass sich Beutel und Taschen aus Papierbahnen, die innenseitig mit der vorliegend beschriebenen Zusammensetzung beschichtet wurden, zuverlässig und bediensicher auch als Müllbeutel bzw. -tasche für die Aufnahme von kompostierbaren Abfällen, insbesondere Küchenabfällen eignen. Im Sinne der vorliegenden Erfindung sollen unter einem Beutel im Allgemeinen solche Gebinde verstanden werden, die über keine Haltegriffe, Haltelaschen, Grifflöcher oder andere Tragevorrichtungen verfügen. Hingegen sollen unter einer Tasche im Sinne der Erfindung regelmäßig solche Gebinde verstanden werden, die mit mindestens einem Haltegriff bzw. mindestens einer Haltelasche oder mindestens einem Griffloch oder einer entsprechend wirkungsgleichen Tragevorrichtung ausgestattet sind.

Die der Erfindung zugrunde liegende Aufgabe wird dabei besonders zufriedenstellend mit solchen wässrigen Zusammensetzungen gelöst, bei denen das mindestens eine Bindemittel auf der Basis einer wässrigen Polymerdispersion eine Acrylat(co)polymerdispersion darstellt oder umfasst, insbesondere eine Styrolacrylatcopolymerdispersion.

Zweckmäßige organische Bindemittel auf der Basis der wässrigen Polymerdispersion gehen dabei im Allgemeinen zurück auf Copolymere, enthaltend Acrylate, Vinylacetat und/oder Styrol, wobei grundsätzlich auch sogenannte Reinacrylate eingesetzt werden können. Exemplarisch seien Vinylacetat/Ethylen-Copolymere, Copolymere auf Basis von Vinylaromaten, insbesondere Styrol, und Acrylaten oder Copolymere auf Basis von Reinacrylaten genannt. Reinacrylate umfassen im Sinne der vorliegenden Erfindung Copolymere von (Meth)acrylaten, d.h. von Acrylaten und/oder Methacrylaten, gegebenenfalls auch mit (Meth)acrylsäure, d.h. Acryl- und/oder Methacrylsäure, als Comonomerbausteine. Das organische Bindemittel wird regelmäßig in Form einer wässrigen Bindemitteldispersion zur Verfügung gestellt. In einer besonders bevorzugten Ausgestaltung basiert das in Wasser dispergierte oder dispergierbare Copolymer dabei auf Acrylsäureestern und Vinylaromaten, insbesondere Styrol. Unter den Styrolacrylatcopolymerdispersionen wird dabei bevorzugt zurückgegriffen auf solche, die auf Styrol-2-ethylhexylacrylat-, alpha-Methylstyrolacrylat-, Styrol/alpha-Methylstyrolacrylat-, Styrolacrylat-, Styrolacrylat/methacrylat-Copolymeren und Salzen dieser Verbindungen, insbesondere Ammoniumsalzen, basieren.

Für die Komponente b) sind solche oxidierten Polyethylenwachse bevorzugt, die im Wesentlichen frei von unpolaren, insbesondere bei 20 °C, d.h. bei Raumtemperatur, flüssigen oder pastösen, Kohlenwasserstoffen sind, also zum Beispiel frei von nicht oxidierten Polyethylenwachsen. Derartige bevorzugte oxidierte Polyethylenwachse sind insbesondere frei von bei 20 °C flüssigen oder pastösen Kohlenwasserstoffen. In einer besonders zweckmäßigen Ausgestaltung sind die Zusammensetzungen im Wesentlichen frei von unpolaren, insbesondere bei 20 °C flüssigen oder pastösen, Kohlenwasserstoffen, also zum Beispiel frei von nicht oxidierten Polyethylenwachsen. Beispielsweise sind in einer weiteren Ausgestaltung der Zusammensetzungen im Wesentlichen frei von Paraffinwachsen.

Geeignete oxidierte Polyethylenwachse verfügen insbesondere über einen Schmelzpunkt im Bereich von 120 bis 135 °C, bevorzugt im Bereich von 125 bis 130 °C.

Bevorzugte Entschäumer für die Zusammensetzungen stellen Polysiloxan-basierte Entschäumer dar. Hierbei wird bevorzugt auf Dimethylpolysiloxan und/oder modifiziertes Dimethylpolysiloxan zurückgegriffen, insbesondere solche mit einem HLB-Wert im Bereich von 1 bis 3.

Als eine insbesondere bei 20 °C, d.h. bei Raumtemperatur, flüchtige Base greift man bevorzugt auf Ammoniak zurück. Auch können als geeignete Basen die Salze des Ammoniaks eingesetzt werden. Durch den Einsatz von insbesondere flüchtigen Basen wie Ammoniak gelingt es, den pH-Wert anfänglich, beispielsweise auch im regelmäßig verschlossenen Lager- und Transportgebinde, möglichst hoch zu halten und ein Agglomerieren des Bindemittels zu verhindern. Auch kann auf diese Weise zu einer verbesserten Topfkonservierung beigetragen werden. Nach dem Auftragen der wässrigen Beschichtungsmasse verdampft diese Base, womit eine Erniedrigung des pH-Wertes einhergeht. Dies wiederum beschleunigt die Ausbildung einer zusammenhängenden Beschichtungslage.

Für die Zusammensetzungen kommen in einer bevorzugten Ausgestaltung ferner solche Netzmittel zum Einsatz, die ein Polyether-basiertes Netzmittel darstellen oder umfassen.

Sofern in den Zusammensetzungen Konservierungsmittel verwendet werden, greifbar hierfür bevorzugt auf Topfkonservierungsmittel zurück. Besonders geeignete Topfkonservierungsmittel umfassen die Gruppe der Isothiazolinone, wobei 1,2-Benzisothiazol-3(2H)-on (BIT), 5-Chlor-2-methyl-4-isothiazolin-3-on (CIT) und 2-Methyl-2(H)-isothiazol-3-on (MIT) bevorzugt sind. Insbesondere greift man Mischungen von 5-Chlor-2-methyl-4-isothiazolin-3-on (CIT) mit 2-Methyl-2(H)-isothiazol-3-on (MIT), vorzugsweise in einem Mischungsverhältnis von etwa 3:1, besonders bevorzugt in einer Gesamtmenge kleiner 15 ppm, sowie auf Mischungen von 2-Methyl-2(H)-isothiazol-3-on (MIT) und 1,2-Benzisothiazol-3(2H)-on (BIT), vorzugsweise in einem Mischungsverhältnis von etwa 1:1, besonders bevorzugt in einer Gesamtmenge von nicht mehr als 200 ppm, zurück Alternativ können auch konservierungsmittelfreie Zusammensetzungen zum Einsatz kommen. Die Zusammensetzungen werden im Sinne der Erfindung im Einklang mit der "Vergabegrundlage für Umweltzeichen" der RAL gemeinnützige GmbH betreffend "Emissionsarme Innenwandfarben RAL-UZ 102" (Ausgabe Januar 2015) als konservierungsmittelfrei angesehen, wenn darin keine Konservierungsmittel oder Konservierungsmittel, auf die Einzelsubstanz bezogen (einschließlich Formaldehyd) in einer Menge < 2 ppm, sowie auch in Bezug auf CIT (5-Chlor-2-Methyl-4-Isothiazolin) in einer Menge < 0,5 ppm enthalten sind.

Unter besonders geeignete Additive fallen z.B. auch geruchsneutralisierende Stoffe. Diese sind insbesondere ausgewählt aus der Gruppe bestehend aus Natriumbicarbonat, Zeolithen, Silica, Cyclodextrinen, insbesondere wasserlöslichen Cyclodextrinen, z.B. beta-Cyclodextrinen, quaternären Ammoniumverbindungen, Metallsalzen einer unverzweigten oder verzweigten und ungesättigten oder gesättigten sowie gegebenenfalls ein oder mehrfach hydroxylierten Fettsäure mit mindestens 16 Kohlenstoffatomen, insbesondere Metallsalzen, vorzugsweise Zinksalzen der Ricinolsäure. Vielfach hat es sich als zweckmäßig erwiesen, diesen geruchsneutralisierenden Stoffen, insbesondere den Metallsalzen der unverzweigten oder verzweigten und ungesättigten oder gesättigten sowie gegebenenfalls ein oder mehrfach hydroxylierten Fettsäuren mit mindestens 16 Kohlenstoffatomen, insbesondere den Zinksalzen der Ricinolsäure, Solubilisatoren und/oder Aktivatoren zuzusetzen. Geeignete Solubilisatoren und/oder Aktivatoren können dabei ausgewählt sein aus der Gruppe bestehend aus Chelatbildnern, Tensiden, insbesondere anionischen Tensiden, Aminosäuren, insbesondere Arginin und/oder Lysin, und beliebigen Mischungen hiervon. Unter den Chelatbildnern kommen bevorzugt die Salze, insbesondere Dreifachsalze, der Iminodiessigsäure, beispielsweise der *N*-(1-Carboxyethyl)-Iminodiessigsäure, zum Einsatz.

Die erfindungsgemäße Papierbahn enthält ein- oder beidseitig mindestens eine Beschichtung gebildet aus der vorliegend beschriebenen wässrigen Papierbeschichtungszusammensetzung. Hierbei verfügt die zu beschichtende Papierbahn über ein Flächengewicht im Bereich von 30 bis 130 g/m², bevorzugt im Bereich von 50 bis 100 g/m².

Bei der Herstellung der Papierbahnen wird mindestens ein vernetzbares Nassverfestigungsmittel zugesetzt, basierend auf vernetzbaren Epichlorhydrin-Harzen, Melamin-Harzen und/oder Harnstoff/Formaldehyd-Harzen. Unter den vernetzbaren Epichlorhydrin-Harzen sind wasserlösliche kationische oligomere oder polymere vernetzbare Polyamid-polyamin-epichlorhydrin-Harze besonders bevorzugt. In der fertigen Papierbahn liegt dieses Nassverfestigungsmittel dann regelmäßig in vernetzter Form vor und trägt zu einer erhöhten Reißfestigkeit vor allem auch im angefeuchteten Zustand bei. Die Nassverfestigungsmittel liegen in der Papierbahn vorzugsweise in einer Menge im Bereich von 0.5 bis 3 Gew.-%, bevorzugt im Bereich von 1 bis 2 Gew.-% (Feststoffanteil), bezogen auf das Trockengewicht der unbeschichteten Papierbahn, vor. Während die vernetzbaren Epichlorhydrin-Harze regelmäßig bei Verfahren für die Herstellung von Papierbahnen zum Einsatz kommen, die sich eines neutralen wässrigen Mediums bedienen, setzt man die vernetzbaren Melamin-Harze und Harnstoff/Formaldehyd-Harze bei Verfahren ein, die saure wässrige Medien nutzen.

Die vorliegend beschriebene wässrige Papierbeschichtungszusammensetzung wird auf die Papierbahn in einer Menge aufgetragen, dass, bezogen auf das Trockengewicht der Papierbeschichtungszusammensetzung, im Bereich von 1 bis 10 g, bevorzugt im Bereich von 1,5 bis 8 g, besonders bevorzugt im Bereich von 2,0 bis 5,0 g und insbesondere im Bereich von 2,5 bis 4,5 g, jeweils pro Quadratmeter Papierbahn, insbesondere im Wesentlichen gleichmäßig verteilt, als Beschichtung auf dieser vorliegen. Die wässrige Papierbeschichtungszusammensetzung wird bevorzugt mit dem Rollenrotationsdruckverfahren, das auch unter dem Begriff Flexodruck bekannt ist, auf die Papierbahn, bei der es sich vorzugsweise um eine noch unbeschichtete Papierbahn handelt, ein- oder beidseitig aufgetragen. Bei dem Rollenrotationsdruckverfahren handelt es sich um ein sogenanntes direktes Hochdruckverfahren. Es hat sich überraschend gezeigt, dass schon eine einseitig mit der wässrigen Papierbeschichtungszusammensetzung beschichtete Papierbahn extrem feuchtbeständig ist und auch in Gegenwart von Feuchtigkeit über einen längeren Zeitraum eine hinreichende Reißfestigkeit beibehält, dies vor allem auch bei Mitverwendung der vorangehend geschilderten Nassverfestigungsmittel bei der Herstellung der zu beschichtenden Papierbahnen.

Auch wird die der Erfindung zugrunde liegende Aufgabe gelöst durch ein Verfahren zur Herstellung einer erfindungsgemäßen Papierbahn, umfassend die Schritte aa) Zurverfügungstellung der vorliegend beschriebenen wässrigen Zusammensetzung, bb) Zurverfügungstellung mindestens einer Papierbahn, cc) ein- oder beidseitiges Auftragen der Zusammensetzung gemäß aa) auf die mindestens eine Papierbahn gemäß bb).

Die als geruchsneutralisierende Stoffe zum Einsatz kommenden Metallsalze der unverzweigten oder verzweigten und ungesättigten oder gesättigten sowie gegebenenfalls ein oder mehrfach hydroxylierten Fettsäuren mit mindestens 16 Kohlenstoffatomen, insbesondere das Zinksalz der Ricinolsäure, liegen vorzugsweise in der wässrigen Zusammensetzung vor und werden regelmäßig bei der Herstellung dieser wässrigen Zusammensetzung in einem zu vorbereiteten wässrigen System zugegeben.

Schließlich wird die der Erfindung zugrunde liegende Aufgabe gelöst durch einen Beutel sowie durch eine Tasche gebildet aus mindestens einer erfindungsgemäßen Papierbahn. Hierbei hat es sich für viele Anwendungen als völlig ausreichend erwiesen, wenn die eingesetzte Papierbahn einseitig beschichtet vorliegt und wenn die beschichtete Seite die Innenseite bildet. In besonders zweckmäßigen Ausgestaltungen sind der erfindungsgemäße Beutel und der Taschenkörper der erfindungsgemäßen Tasche, d.h. abgesehen von den Haltelaschen, im Wesentlichen einstückig aus der Papierbahn der erfindungsgemäßen Papierbahn gefertigt. Der erfindungsgemäße Beutel sowie die erfindungsgemäße Tasche sind vorzugsweise mit einer Vorder- und einer Rückwand sowie besonders bevorzugt auch mit sich gegenüberliegenden Seitenwänden ausgestattet.

Die erfindungsgemäßen Beutel und Taschen verfügen vielfach über gegenüberliegende Seitenfalten und/oder über einen Blockboden, vorzugsweise sowohl über sich gegenüberliegende Seitenfalten und einen Blockboden.

Unabhängig davon, ob ein oder mehrere erfindungsgemäße Papierbahnen für die Herstellung der erfindungsgemäßen Beutel und Taschen verwendet werden, sind bei dieser Herstellung regelmäßig überlappende Abschnitte benachbarter Papierbahnen oder ein und derselben Papierbahn, insbesondere im Bodenbereich und/oder im Bereich der Vorder-, Rück- und/oder Seitenwände, mit einem wasserbasierten Kleber, insbesondere auf Basis einer Polyvinylacetatdispersion oder auf Basis einer Epoxyacrylat-Emulsion, einem Heißschmelzkleber oder mit einem Kleber auf Stärkebasis verklebt. Für die sich vom Bodenbereich bis zum Öffnungsbereich erstreckende Klebenaht kann insbesondere dann auf herkömmliche Klebematerialien wie Kleber auf Stärkebasis oder Heißschmelzkleber zurückgegriffen werden, wenn in den miteinander zu verklebenden Arealen die Beschichtung der erfindungsgemäßen Papierbahn nicht vorliegt. Demgemäß erstreckt sich in einer Ausführungsform die auf der erfindungsgemäßen Papierbahn vorliegende Beschichtung aus der Beschichtungsmasse bis zu einem Abstand von dem Rand der Papierbahn, insbesondere bis zum Rand des für die überlappende Verklebung verwendeten Kantenabschnitts der Papierbahn.

Die erfindungsgemäßen Beutel und Taschen sind als Müllbeutel bzw. -taschen einsetzbar, und zwar insbesondere auch für die Aufnahme von kompostierbarem Abfall, insbesondere Küchenabfall. Hierbei ist von besonderem Vorteil, dass die erfindungsgemäßen Beutel und Taschen selber kompostierbar sind und demgemäß eine Entleerung vor Überführung des kompostierbaren Abfalls auf einen Komposthaufen oder in eine sogenannte Biotonne nicht mehr erforderlich ist. Die erfindungsgemäßen Taschen sind dabei zweckmäßigerweise mit Tragebügeln bzw. Halteschlaufen an Vorder- und Rückwand ausgestattet. Diese sind regelmäßig ebenfalls aus einem Papiermaterial gefertigt. Dieses Papiermaterial hat üblicherweise nicht mit der vorliegend beschriebenen Zusammensetzung beschichtet zu sein. Vielfach hat es sich als zweckmäßig erwiesen, diese Tragebügel bzw. Halteschlaufen (zuweilen auch Haltelaschen genannt) an der Innenseite von Vorder- bzw. Rückwand anzubringen bzw. anzukleben, wobei es nicht unbedingt erforderlich ist, die innenseitig vorliegenden Klebeareale zusätzlich mit einem papierenen Deckblatt abzudecken. Zwar ist es grundsätzlich auch möglich, diese Tragebügel bzw. Halteschlaufen auf der Außenseite der Tasche anzubringen. Allerdings hat sich dieses bei der Herstellung, dem Transport und der Lagerung nicht unbedingt als vorteilhaft aufgedrängt. Demgemäß verfügen besonders vorteilhafte erfindungsgemäße Taschen über mindestens eine innenseitig an der Beschichtung, insbesondere der Vorderwand, angebrachte erste Halteschlaufe, insbesondere befestigt mit einem Heißschmelzkleber, und gegebenenfalls über mindestens eine innenseitig an der Beschichtung, insbesondere der Rückwand, angebrachte zweite Halteschlaufe, insbesondere befestigt mit einem Heißschmelzkleber. Diese Halteschlaufen basieren vorzugsweise ebenfalls auf Papiermaterial.

Bei Hcißschmclzklebern handelt es sich im Allgemeinen um bei Raumtemperatur feste, im Wesentlichen Wasser- und lösemittelfreie Klebstoffe, die auf die zu verklebenden Teile aus der Schmelze aufgetragen werden und nach dem Zusammenfügen beim Abkühlen unter Verfestigung physikalisch abbinden. Bereits bei leichtem Anpressdruck wird mit solchen Heißschmelzklebern bzw. Schmelzhaftklebstoffen eine dauerhafte Haftung erzielt.

Die für die innenseitige Anbringung der Halteschlaufen auf der innenseitig vorliegenden Beschichtung der erfindungsgemäßen Papierbahn geeigneten Heißschmelzkleber basieren auf Polyester-Urethan-Kautschuken; Butyl-Kautschuken; Naturkautschuken; Polyolefin-Copolymeren, insbesondere Ethylen-Propylen-Copolymere und/oder amorphen Polyalpha-olefine, vorzugsweise mittels Metallocen-Katalyse hergestellte Polyolefin-Copolymere; Kohlenwasserstoffharzen; Styrol-Co- oder -blockpolymeren; Acrylat-Copolymeren, insbesondere Acrylat-Kautschuke und/oder Ethylen-Acrylat-Kautschuke; Ethylen-Vinylacetat-Copolymeren oder deren beliebige Mischungen.

In einer bevorzugten Ausfuhrungsform kommen für die Heißschmelzkleber, mit denen die Haltelaschen innenseitig angebracht werden, bevorzugt solche zum Einsatz, die Mischungen aus mindestens einem Styrol-Co- oder blockcopolymeren, insbesondere ausgewählt aus der Gruppe bestehend aus Styrol-Isopren-Styrol- (SIS)-, Styrol-Butadien-Styrol- (SBS)- und Styrol-Ethylen-Butylen-Styrol- (SEBS)- co- oder block-Copolymeren, und mindestens einem Ethylenvinylacetat-Copolymeren umfassen oder darstellen. Mit den vorangehend geschilderten Heißschmelzklebern erhält man eine nochmals gesteigerte Tragkraft. Diese Heißschmelzkleber, auch Schmelzhaftklebestoffe genannt, verfügen regelmäßig über eine elastomere Klebstoffkomponente mit einer Glasübergangstemperatur Tg von meist unter 0°C.

Besonders bevorzugt wird für die innenseitige Anbringung der Halteschlaufen auf der innenseitig vorliegenden Beschichtung der erfindungsgemäßen Papierbahn auf solche Heißschmelzkleber zurückgegriffen, die darüber hinaus klebrigmachende Harze und gegebnfalls Weichmacher, insbesondere paraffinische, naphthenische und/oder aromatische Weichmacheröle und/oder Weichmacher vom Estertyp, und/oder mindestens ein Additiv, insbesondere ausgewählt aus der Gruppe bestehend aus Alterungsschutzmitteln, Farbstoffen und/oder Antistatikzusätzen, enthalten.

Eine besonders geeignete Heißschmelzkleberzusammensetzung, die insbesondere auch für die innenseitige Anbringung der Halteschlaufen zu verwenden ist, umfasst zum Beispiel 15 bis 45 Gewichtsprozent, bevorzugt 20 bis 40 Gewichtsprozent und besonders bevorzugt 25 bis 35 Gewichtsprozent, an mindestens einem Heißschmelzkleber, zweckmäßiger Weise wie vorangehend beschrieben, besonders bevorzugt in Form einer Mischung aus Acrylat-Copolymeren und mindestens einem Ethylen-Vinylacetat-Copolymeren oder einer Mischung aus mindestens einem Styrol-Co- oder -blockcopolymeren, und mindestens einem Ethylenvinylacetat-Copolymeren, 30 bis 70 Gewichtsprozent, vorzugsweise 40 bis 60 Gewichtsprozent und besonders bevorzugt 45 bis 55 Gewichtsprozent, an mindestens einem klebrigmachenden Harz, insbesondere Esterharzen und/oder Kohlenwasserstoffharzen, z.B. Kohlenwasserstoffharze vom C5/C9-Typ, und 5 bis 35 Gewichtsprozent, bevorzugt 10 bis 30 Gewichtsprozent und besonders bevorzugt 15 bis 95 Gewichtsprozent, an mindestens einem Weichmacher, insbesondere einem mineralöl-basierten Weichmacher, beispielsweisemedizinische Weißöle, wobei die die Heißschmelzkleberzusammensetzung bildenden Komponenten stets 100,0 Gewichtsprozent ergeben.

Für die Verklebung überlappender Papierbahnabschnitte im Bodenbereich der erfindungsgemäßen Tasche oder des erfindungsgemäßen Beutels, insbesondere auch solcher Abschnitte, die die Beschichtung aus der Beschichtungsmasse aufweisen, beispielsweise zur Ausbildung eines Blockbodens, wird bevorzugt zurückgegriffen auf wasserbasierte Kleber, die eine Mischung aus mindestens einem Acrylat-Copolymeren und mindestens einem Ethylen-Vinylacetat-Copolymeren darstellen oder umfassen. Acrylat-Copolymere und Ethylen-Vinylacetat-Copolymere werden dabei bevorzugt in Dispersionsform eingesetzt. Besonders geeignete Ethylen-Vinylacetat-Copolymere verfügen über einen_Vinylacetat-Gehalt im Bereich von 40 bis 90 Gew-%.

Die vorangehend genannten Heißschmelzkleber können ebenfalls eingesetzt werden für die Verklebung überlappender Papierbahnareale im Bodenbereich wie auch in sich überlappenden Bereichen, die sich vom Boden bis zur Taschen- bzw. Beutelöffnung erstrecken. Selbstverständlich können auch die für die innenseitige Anbringung der Halteschlaufen beschriebenen Heißschmelzkleber, ausgestattet mit den vorangehend geschilderten klebrigmachenden Harzen und gegebenenfalls auch mit den Weichmachern wie paraffinischen, naphthenischen und/oder aromatischen Weichmacherölen und/oder Weichmachern vom Estertyp, und/oder mindestens einem Additiv, für die Verklebung überlappender Papierbahnabschnitte im Bodenbereich, beispielsweise für die Bildung eines Blockbodens, oder für die Verklebung überlappendender Bereiche, die sich vom Boden bis zur Taschen- bzw.

Beutelöffnung erstrecken, verwendet werden, allerdings werden hierfür bevorzugt die vorangehend genannten wasserbasierten Kleber eingesetzt.

In einer besonders zweckmäßigen Ausgestaltung sind die erfindungsgemäßen Taschen (abgesehen von den Tragebügeln) aus einer einzigen Papierbahn, d.h. einstückig, gefertigt.

Die in der voranstehenden Beschreibung und den Ansprüchen offenbarten Merkmale der Erfindung können sowohl einzeln aus auch in jeder beliebigen Kombination für die Verwirklichung der Erfindung vorteilhaft sein.

## Patentansprüche

1. Beschichtete Papierbahn, enthaltend ein- oder beidseitig mindestens eine Beschichtung gebildet aus einer wässrigen Papierbeschichtungszusammensetzung, enthaltend
a) mindestens ein Bindemittel auf der Basis einer wässrige Polymerdispersion,
b) mindestens einen oxidierten Polyethylenwachs und
c) mindestens einen Entschäumer, wobei
die Papierbahn im unbeschichteten Zustand ein Flächengewicht im Bereich von 30 bis 130 g/m² aufweist und mindestens ein vernetztes Nassverfestigungsmittel basierend auf vernetzbaren Epichlorhydrin-Harzen, Melamin-Harzen und/oder Harnstotf/Formaldehyd-Harzen enthält und wobei
die Beschichtung aus der wässrigen Papierbeschichtungszusammensetzung auf der Papierbahn in einer Menge, bezogen auf das Trockengewicht der Papierbeschichtungszusammensetzung, im Bereich von 1 bis 10 g pro Quadratmeter Papierbahn vorliegt.

2. Beschichtete Papierbahn nach Anspruch 1, **dadurch gekennzeichnet, dass** die Zusammensetzung ferner umfasst
d) mindestens eine, insbesondere bei 20 °C, flüchtige Base,
e) mindestens ein Netz- und/oder Dispergiermittel,
f) mindestens ein Konservierungsmittel, insbesondere Topfkonservierungsmittel, und/oder
g) mindestens ein Additiv sowie gegebenenfalls
h) mindestens ein Pigment und/oder einen Füllstoff,

3. Beschichtete Papierbahn nach Anspruch 1 oder 2, **dadurch gekennzeichnet, dass** die Zusammensetzung enthält
25 bis 55 Gew.-%, bevorzugt 30 bis 45 Gew.-% an Komponente a), bezogen auf den Feststoffanteil,
0,5 bis 10 Gew.-%, bevorzugt 1,0 bis 6,5 Gew.-% an Komponente b), bezogen auf den wasser- und lösemittelfreien Wirkstoffanteil,
0,005 bis 3,0 Gew.-%, bevorzugt 0.01 bis 2,0 Gew.-%, an Komponente c), bezogen auf den wasser- und lösemittelfreien Wirkstoffanteil,
0,001 bis 4 Gew.-%, bevorzugt 0,005 bis 3 Gew.-%, an Komponente d), bezogen auf den Feststoffanteil bzw. auf den wasser- und lösemittelfreien Wirkstoffanteil, 0,1 bis 4,0 Gew.-%, bevorzugt 0,25 bis 3,0 Gew.-%, an Komponente e), bezogen auf den Feststoffallteil bzw. auf den wasser- und lösemittelfreien Wirkstoffanteil,
0,0005 bis 0,1 Gew.-%, bevorzugt 0,001 bis 0,05 Gew.-%, an Komponente f), bezogen auf den Feststoffanteil bzw. auf den wasser- und lösemittelfreien Wirkstoffanteil,
0,05 bis 8 Gew.-%, bevorzugt 0,1 bis 6 Gew.-%, an Komponente g), bezogen auf den Feststoffanteil bzw. auf den wasser- und lösemittelfreien Wirkstoffanteil, 0 bis 25% Gew, %, bevorzugt 1 bis 15 Gew, %, an Komponente h), bezogen auf den Feststoffanteil, und/oder
30 bis 80 Gew.-%, bevorzugt 40 bis 70 Gew.-%, an Wasser,
wobei die prozentualen Gewichtsanteile der Komponenten sieh auf das Gesamtgewicht der Zusammensetzung beziehen und wobei die die Zusammensetzung bildenden Komponenten, einschließlich Wasser, sich stets zu 100,00 Gew.-% addieren.

4. Beschichtete Papierbahn nach einem der vorangehenden Ansprüche, **dadurch gekennzeichnet, dass**
in der Zusammensetzung das mindestens eine Bindemittel auf der Basis einer wässrigen Polymerdispersion eine Acrylat(co)polymerdispersion darstellt oder umfasst, insbesondere eine Styrolacrylatcopolymerdispersion, und/oder dass der mindestens eine Entschäumer einen Polvsiloxan-basierten Entschäumer darstellt oder umfasst und/oder dass
die mindestens eine Base Ammoniak und/oder dessen Salze darstellt oder umfasst und/oder dass
das mindestens eine Netzmittel ein Polyether-basiertes Netzmittel darstellt oder umfasst und/oder dass
das oxidierte Polyethylenwachs einen oxidierten HD-Polyethylenwachs darstellt oder umfasst.

5. Beschichtete Papierbahn nach einem der vorangehenden Ansprüche, **dadurch gekennzeichnet, dass**
die Zusammensetzung im Wesentlichen frei von Paraffinwachsen ist und/oder dass
das oxidierte Polyethylenwachs und insbesondere die Zusammensetzung im Wesentlichen frei von unpolaren, insbesondere bei 20 °C flüssigen oder pastösen, Kohlenwasserstoffen ist und/oder dass
das oxidierte Polyethylenwachs einen Schmelzpunkt im Bereich von 120 bis 135 °C, bevorzugt im Bereich von 125 bis 130 °C, aufweist

6. Beschichtete Papierbahn nach einem der vorangehenden Ansprüche, **dadurch gekennzeichnet, dass**
das mindestens eine Bindemittel auf der Basis einer wässrigen Polymerdispersion, insbesondere die Styrolacrylatcopolymerdispersion, ausgewählt ist aus der Gruppe bestehend aus Styrol-2-ethylhexylacrylat, alpha-Methylstyrolacrylat, Styrol/alpha-Methylstyrolacrylat, Styrolacrylat, Styrolacrylat/methacrylat und Salzen dieser Verbindungen, insbesondere Ammoniumsalzen, und/oder dass der Entschäumer Dimethylpolysiloxan und/oder modifiziertes Dimethylpolysiloxan umfasst oder darstellt, insbesondere mit einem HLB-Wert im Bereich von 1 bis 3, und/oder
dass das Additiv geruchsneutralisierende Stoffe umfasst, insbesondere ausgewählt aus der Gruppe bestehend aus Natriumbicarbonat, Zeolithen, Silica, Cyclodextrinen, insbesondere wasserlöslichen Cyclodextrinen, z.B. beta-Cyclodextrinen. quaternären Ammoniumverbindungen, Metallsalzen einer unverzweigten oder verzweigten und ungesättigten oder gesättigten sowie gegebenenfalls ein oder mehrfach hydroxylierten Fettsäure mit mindestens 16 Kohlenstoffatomen, insbesondere Metallsalzen, vorzugsweise Zinksalzen, der Ricinolsäure, sowie gegebenenfalls Solubilisatoren und/oder Aktivatoren der geruchsneutralisierenden Stoffe, insbesondere ausgewählt aus der Gruppe bestehend aus Tensiden, insbesondere anionischen Tensiden, Aminosäuren, insbesondere Arginin und/oder Lysin, und beliebigen Mischungen hiervon.

7. Beschichtete Papierbahn nach einem der vorangehenden Ansprüche, **dadurch gekennzeichnet, dass**
diese im unbeschichteten Zustand ein Flächen gewacht im Bereich von 50 bis 100 g/m² aufweist und/oder dass
das vernetzte Nassverfestigungsmittel auf wasserlöslichen kationischen oligomeren oder polymeren vernetzbaren Polyamidpolyaminepichlorhydrin-Harzen, Melamin-Harzen und/oder Harnstotf/Formaldehyd-Harzen basiert, insbesondere in einer Menge im Bereich von 0.5 bis 3 Gew.-%, bevorzugt im Bereich von 1 bis 2 Gew.-% (Feststoffanteil), bezogen auf das Trockengewicht der unbeschichteten Papierbahn.

8. Beschichtete Papierbahn nach einem der vorangehenden Ansprüche, **dadurch gekennzeichnet, dass**
die Beschichtung aus der wässrigen Papierbeschichtungszusammensetzung auf der Papierbahn in einer Menge, bezogen auf das Trockengewicht der Papierbeschichtungszusammensetzung, im Bereich von 1,5 bis 8 g und bevorzugt im Bereich von 2,0 bis 5,0 g, jeweils pro Quadratmeter Papierbahn, vorliegt.

9. Verfahren zur Herstellung einer Papierbahn nach einem der vorangehenden Ansprüche, umfassend die Schritte
aa) Zurverfügungstellung einer wässrigen Zusammensetzung gemäß einem der Ansprüche 1 bis 8, insbesondere enthaltend das Metallsalz der unverzweigten oder verzweigten und ungesättigten oder gesättigten sowie gegebenenfalls ein oder mehrfach hydroxylierten Fettsäure mit mindestens 16 Kohlenstoffatomen, insbesondere das Zinksalze der Ricinolsäure,
bb) Zurverfügungstellung mindestens einer Papierbahn,
cc) ein- oder beidseitiges Aufträgen der Zusammensetzung gemäß aa), insbesondere mit dem Rollenrotationsdruckverfahren, auf die mindestens eine Papierbahn gemäß bb).

10. Beutel oder Tasche, insbesondere kompostierbarer Beutel oder kompostierbare Tasche, gebildet aus
mindestens einer Papierbahn nach einem der Ansprüche 1 bis 8, insbesondere umfassend eine Vorder- und eine Rückwand sowie gegebenenfalls sich gegenüberliegende Seitenwände.

11. Beutel oder Tasche nach Anspruch 10, **dadurch gekennzeichnet, dass**
die Papierbahn einseitig beschichtet ist und/oder dass diese Beschichtung innenseitig vorliegt.

12. Beutel oder Tasche nach Anspruch 10 oder 11, **dadurch gekennzeichnet, dass** diese im Wesentlichen einstückig aus der Papierbahn gefertigt sind und/oder dass überlappende Abschnitte der Papierbahn oder von den Papierbahnen, insbesondere im Bodenbereich und/oder im Bereich der Vorder-, Rück- und/oder Seitenwände, mit einem wasserbasierten Kleber, insbesondere auf Basis einer Polyvinylacetatdispersion oder auf Basis einer Epoxyacrylat-Emulsion, Heißschmelzkleber oder Kleber auf Stärkebasis, insbesondere einem wasserbasierten Kleber, verklebt sind.

13. Tasche nach einem der Ansprüche 10 bis 12. umfassend
mindestens eine innenseitig an der Beschichtung, insbesondere der Vorderwand, angebrachte erste Halteschlaufe, insbesondere befestigt mit einem Heißschmelzkleber, und gegebenenfalls mindestens eine innenseitig an der Beschichtung, insbesondere der Rückwand, angebrachte zweite Haltesehlaufe, insbesondere befestigt mit einem Heißschmelzkleber.

14. Tasche nach Anspruch 13, **dadurch gekennzeichnet, dass**
der Heißschmelzkleber basiert auf Polyester-Urethan-Kautschuken; Butyl-Kautschuken; Naturkautschuken; Polyolefin-Copolymeren, insbesondere Ethylen-Propylen-Copolymere und/oder amorphen Polyalphaolefinen, vorzugsweise mittels Metallocen-Katalyse hergestellte Polvolefin-Copolymere; Styrol-Co- oder - blockpolymeren; Acrylat-Copolymeren, insbesondere Acrylat-Kautschuke und/oder Ethylen-Acrylat-Kautschuke; Ethylen-Vinylacetat-Copolymeren oder deren beliebige Mischungen,

15. Tasche nach einem der Ansprüche 12 bis 14, **dadurch gekennzeichnet, dass**
der wasserbasierte Kleber, insbesondere in Form einer Dispersion, eine Mischung aus mindestens einem Acrylat-Copolymeren und mindestens einem Ethylen-Vinylacetat-Copolymeren, insbesondere mit einem Vinylacetat-Gehalt im Bereich von 40 bis 90 Gew-%, umfasst oder darstellt, oder eine Mischung aus mindestens einem Styrol-Co- oder -blockcopolymeren, insbesondere ausgewählt aus der Gruppe bestehend aus Styrol-Isopren-Styrol (SIS)-, Styrol-Butadien-Styrol- (SBS)- und Styrol-Ethylen-Butylen-Styrol- (SEBS)- co- oder -block-Copolymeren, und mindestens einem Ethylenvinylacetat-Copolymeren umfasst oder darstellt und/oder dass überlappende Abschnitte der Papierbahn oder von den Papierbahnen im Bodenbereich mit dem wasserbasierten Kleber verklebt sind.

16. Beutel oder Tasche nach einem der Ansprüche 10 bis 15, **dadurch gekennzeichnet, dass**
der Heißschmelzkleber ferner enthält mindestens einen klebrigmachenden Harz und gegebenenfalls mindestens einen Weichmacher, insbesondere ein paraffinisches, naphthenisches und/oder aromatisches Weichmacheröl und/oder einen Weichmacher vom Estertyp, und/oder mindestens ein Additiv, insbesondere ausgewählt aus der Gruppe bestehend aus Alterungsschutzmitteln, Farbstoffen und/oder Antistatikzusätzen.

17. Beutel oder Tasche nach Anspruch 16, **dadurch gekennzeichnet, dass** das mindestens eine klebrigmachende Harz ausgewählt ist aus der Gruppe bestehend aus Rosinester-Harzen, insbesondere ganz oder teil-hydrierte Rosinester- Harze; maleinisierten Derivaten dieser Rosinesterharze; Abietinester-Harzen; modifizierten Naturharzen, insbesondere Harzsäuren aus Balsamharz, Tallharz oder Wurzelharz; modifizierten Terpen-Harzen, bevorzugt Terpen-Co- oder
-terpolymere, besonders bevorzugt Styrol-Terpene, alpha-Methyl-Styrol-Terpene, Phenol-modifizierte Terpen-Harze oder hydrierte Derivate davon; Acrylsaure-Copolymerisaten; aromatischen, aliphatischen oder cycloaliphatischen Kohlenwasserstoffharzen, insbesondere Kohlenwasserstoffharze vom C5/C9-Typ; deren modifizierte oder hydrierte Derivate; und beliebigen Mischungen hiervon und/oder dass der mindestens eine Weichmacher ausgewählt ist aus der Gruppe bestehend aus Alkylestern aliphatischer oder aromatischer Carbonsäuren, insbesondere Adipate, Sebacate, Phthalate, Citrate, Benzoate oder Mellitate, aromatischen Sulfonaten, Polyalkylenglykolen, insbesondere Polypropylenglykol oder Polybutylenglykol, mineralöl-basierten Weichmachern, insbesondere Weißöl, und deren Mischungen.

18. Verwendung des Beutels oder der Tasche gemäß einem der Ansprüche 10 bis 17 als Müllbeutel oder Mülltasche, insbesondere für die Aufnahme von kompostierbarem Abfall, insbesondere Küchenabfall.

## Claims

1. A coated paper sheet, containing at least one coating formed from an aqueous paper coating composition on one or both sides, containing
a) at least one binding agent based on an aqueous polymer dispersion,
b) at least one oxidised polyethylene wax, and
c) at least one defoaming agent, wherein
the paper sheet has, in the uncoated condition, a basis weight in the range of 30 to 130 g/m² and contains at least one cross-linked wet strength agent based on cross-linkable epichlorohydrin resins, melamine resins and/or urea-formaldehyde resins, and wherein
the coating made from the aqueous paper coating composition is present on the paper sheet in a quantity, based on the dry weight of the paper coating composition, in the range of 1 to 10 g per square meter of paper sheet.

2. The coated paper sheet according to Claim 1, **characterised in that** the composition further comprises
d) at least one base which is in particular volatile at 20°C
e) at least one wetting agent and/or dispersing agent,
f) at least one preservative, in particular in-can preservative, and/or
g) at least one additive as well as, optionally,
h) at least one pigment and/or one filler.

3. The coated paper sheet according to Claim 1 or 2, **characterised in that** the composition contains
25 to 55 wt%, preferably 30 to 45 wt%, of component a), based on the solids content, 0.5 to 10 wt%, preferably 1.0 to 6.5 wt%, of component b), based on the anhydrous and solvent-free active ingredient content,
0.005 to 3.0 wt%, preferably 0.01 to 2.0 wt%, of component c), based on the anhydrous and solvent-free active ingredient content,
0.001 to 4 wt%, preferably 0.005 to 3 wt%, of component d), based on the solids content or on the anhydrous and solvent-free active ingredient content,
0.1 to 4.0 wt%, preferably 0.25 to 3.0 wt%, of component e), based on the solids content or on the anhydrous and solvent-free active ingredient content,
0.0005 to 0.1 wt%, preferably 0.001 to 0.05 wt%, of component f), based on the solids content or on the anhydrous and solvent-free active ingredient content,
0.05 to 8 wt%, preferably 0.1 to 6 wt%, of component g), based on the solids content or on the anhydrous and solvent-free active ingredient content,
0 to 25% wt%, preferably 1 to 15 wt%, of component h), based on the solids content, and/or
30 to 80 wt%, preferably 40 to 70 wt%, of water,
wherein the percentages by weight of the components refer to the total weight of the composition and wherein the components forming the composition, including water, always add up to 100.00 wt%.

4. The coated paper sheet according to any one of the preceding claims, **characterised in that**
in the composition the at least one binding agent based on an aqueous polymer dispersion constitutes or comprises an acrylate (co)polymer dispersion, in particular a styrene acrylate copolymer dispersion, and/or the at least one defoaming agent constitutes or comprises a polysiloxane-based defoaming agent and/or that the at least one base constitutes or comprises ammonia and/or the salts thereof and/or that the at least one wetting agent constitutes or comprises a polyether-based wetting agent and/or that
the oxidised polyethylene wax constitutes or comprises an oxidised HD polyethylene wax.

5. The coated paper sheet according to any one of the preceding claims, **characterised in that**
the composition is substantially free of paraffin waxes and/or that the oxidised polyethylene wax and in particular the composition is substantially free of non-polar hydrocarbons which are in particular liquid or paste-like at 20°C and/or that
the oxidised polyethylene wax has a melting point in the range of 120 to 135°C, preferably in the range of 125 to 130°C.

6. The coated paper sheet according to any one of the preceding claims, **characterised in that**
the at least one binding agent based on an aqueous polymer dispersion, in particular the styrene acrylate copolymer dispersion, is selected from the group consisting of styrene-2-ethylhexyl acrylate, alpha-methylstyrene acrylate, styrene/alpha-methylstyrene acrylate, styrene acrylate, styrene acrylate/methacrylate and salts of these compounds, in particular ammonium salts, and/or that
the defoaming agent comprises or constitutes dimethylpolysiloxane and/or modified dimethylpolysiloxane, in particular having an HLB value in the range of 1 to 3, and/or that
the additive comprises odour-neutralising substances, in particular selected from the group consisting of sodium bicarbonate, zeolites, silica, cyclodextrins, in particular water-soluble cyclodextrins, e.g. beta-cyclodextrins, quaternary ammonium compounds, metal salts of an unbranched or branched and unsaturated or saturated as well as, optionally, monohydroxylated or polyhydroxylated fatty acid having at least 16 carbon atoms, in particular metal salts, preferably zinc salts, of ricinoleic acid, as well as, optionally, solubilisers and/or activators of the odour-neutralising substances, in particular selected from the group consisting of surfactants, in particular anionic surfactants, amino acids, in particular arginine and/or lysine, and any mixtures hereof.

7. The coated paper sheet according to any one of the preceding claims, **characterised in that**
said coated paper sheet, in the uncoated state, has a base weight in the range of 50 to 100 g/m² and/or that
the cross-linked wet strength agent is based on water-soluble cationic oligomeric or polymeric cross-linkable polyamide-polyamine-epichlorohydrin resins, melamine resins and/or urea/formaldehyde resins, in particular in a quantity in the range of 0.5 to 3 wt%, preferably in the range of 1 to 2 wt% (solids content), based on the dry weight of the uncoated paper sheet.

8. The coated paper sheet according to any one of the preceding claims, **characterised in that**
the coating made from the aqueous paper coating composition is present on the paper sheet in a quantity, based on the dry weight of the paper coating composition, in the range of 1.5 to 8 g and preferably in the range of 2.0 to 5.0 g, in each case per square meter of paper sheet.

9. A method for producing a paper sheet according to any one of the preceding claims, comprising the steps
aa) provision of an aqueous composition according to any one of Claims 1 to 8, in particular containing the metal salt of the unbranched or branched and unsaturated or saturated as well as, optionally, a monohydroxylated or polyhydroxylated fatty acid having at least 16 carbon atoms, in particular the zinc salts of ricinoleic acid,
bb) provision of at least one paper sheet,
cc) applying the composition according to aa) on one or both sides, in particular with the web-fed rotary printing method, onto the at least one paper sheet according to bb).

10. A sack or bag, in particular a compostable sack or compostable bag, formed from at least one paper sheet according to any one of Claims 1 to 8, in particular comprising a front and a back wall as well as, optionally, opposite side walls.

11. The sack or bag according to Claim 10, **characterised in that** the paper sheet is coated on one side and/or that this coating is present on the inside.

12. The sack or bag according to Claim 10 or 11, **characterised in that** these are substantially manufactured in one piece from the paper sheet and/or that overlapping sections of the paper sheet or of the paper sheets are glued in particular in the bottom region and/or in the region of the front, back and/or side walls, with a water-based adhesive, in particular based on a polyvinyl acetate dispersion or based on an epoxy acrylate emulsion, hot-melt adhesive or starch-based adhesive, in particular a water-based adhesive.

13. The bag according to any one of Claims 10 to 12, comprising at least one first retaining loop affixed to the inside of the coating, in particular the front wall, in particular attached with a hot-melt adhesive, and optionally at least one second retaining loop affixed to the inside of the coating, in particular of the back wall, in particular attached with a hot-melt adhesive.

14. The bag according to Claim 13, **characterised in that**
the hot-melt adhesive is based on polyester urethane rubbers; butyl rubbers; natural rubbers; polyolefin copolymers, in particular ethylene-propylene copolymers and/or amorphous polyalphaolefins, preferably polyolefin copolymers produced by means of metallocene catalysis; styrene copolymers or block polymers; acrylate copolymers, in particular acrylate rubbers and/or ethylene-acrylate rubbers; ethylene-vinyl acetate copolymers or any mixtures thereof.

15. The bag according to any one of Claims 12 to 14, **characterised in that** the water-based adhesive, in particular in the form of a dispersion, comprises or constitutes a mixture of at least one acrylate copolymer and at least one ethylene-vinyl acetate copolymer, in particular having a vinyl acetate content in the range of 40 to 90 wt%, or comprises or constitutes a mixture of at least one styrene copolymer or block copolymer, in particular selected from the group consisting of styrene-isoprene-styrene (SIS), styrene-butadiene-styrene (SBS) and styrene-ethylene-butylene-styrene (SEBS) copolymers or block copolymers, and at least one ethylene vinyl acetate copolymer, and/or that overlapping sections of the paper sheet or of the paper sheets are glued in the bottom region with the water-based adhesive.

16. The sack or bag according to any one of Claims 10 to 15, **characterised in that** the hot-melt adhesive further contains at least one tackifying resin and, optionally, at least one plasticiser, in particular a paraffinic, naphthenic and/or aromatic plasticiser oil and/or a plasticiser of the ester type, and/or at least one additive, in particular selected from the group consisting of anti-agers, dyes and/or antistatic additives.

17. The sack or bag according to Claim 16, **characterised in that** the at least one tackifying resin is selected from the group consisting of rosin ester resins, in particular wholly or partially hydrogenated rosin ester resins; maleinised derivatives of said rosin ester resins; abietene ester resins; modified natural resins, in particular resin acids made from balsam resin, tall resin or root resin; modified terpene resins, preferably terpene copolymers or terpolymers, particularly preferably styrene terpenes, alpha-methylstyrene terpenes, phenol-modified terpene resins or hydrogenated derivatives thereof; acrylic acid copolymers; aromatic, aliphatic or cycloaliphatic hydrocarbon resins, in particular hydrocarbon resins of the C5/C9 type; their modified or hydrogenated derivatives; and any mixtures hereof and/or that the at least one plasticiser is selected from the group consisting of alkyl esters of aliphatic or aromatic carboxylic acids, in particular adipates, sebacates, phthalates, citrates, benzoates or mellitates, aromatic sulphonates, polyalkylene glycols, in particular polypropylene glycol or polybutylene glycol, mineral oil-based plasticisers, in particular white oil, and mixtures thereof.

18. Use of the sack or the bag according to any one of Claims 10 to 17 as a garbage sack or garbage bag, in particular for receiving compostable waste, in particular kitchen waste.

## Revendications

1. Bande de papier revêtue, contenant au moins un revêtement sur un côté ou sur deux côtés, formé d'une composition de revêtement de papier aqueuse, contenant
a) au moins un liant à base d'une dispersion polymère aqueuse,
b) au moins une cire de polyéthylène oxydée et
c) au moins un antimoussant,
la bande de papier présentant un grammage dans la plage de 30 à 130 g/m² à l'état non revêtu, et contenant au moins un agent de résistance à l'état humide réticulé à base de résines épichlorhydrines, résines de mélamine et/ou résines urée/formaldéhyde réticulables, et
le revêtement à partir de composition de revêtement de papier aqueuse sur la bande de papier étant présent dans une teneur dans la plage de 1 à 10 g par mètre carré de bande de papier, rapporté au poids sec de la composition de revêtement de papier.

2. Bande de papier revêtue selon la revendication 1, **caractérisée en ce que** la composition comprend en outre
d) au moins une base volatile, en particulier à 20 °C,
e) au moins un agent mouillant et/ou un agent dispersant,
f) au moins un conservateur, en particulier un conservateur en pot, et/ou
g) au moins un additif, ainsi que le cas échéant
h) au moins un pigment et/ou une charge.

3. Bande de papier revêtue selon la revendication 1 ou 2, **caractérisée en ce que** la composition contient
de 25 à 55 % massique, de préférence de 30 à 45 % massique de composant a), rapporté à la teneur en matières solides,
de 0,5 à 10 % massique, de préférence de 1,0 à 6,5 % massique de composant b), rapporté à la teneur en substances actives exemptes d'eau et de solvants,
de 0,005 à 3,0 % massique, de préférence de 0,01 à 2,0 % massique de composant c), rapporté à la teneur en substances actives exemptes d'eau et de solvants,
de 0,001 à 4 % massique, de préférence de 0,005 à 3 % massique de composant d), rapporté à la teneur en matières solides ou à la teneur en substances actives exemptes d'eau et de solvants,
de 0,1 à 4,0 % massique, de préférence de 0,25 à 3,0 % massique de composant e), rapporté à la teneur en matières solides ou à la teneur en substances actives exemptes d'eau et de solvants,
de 0,0005 à 0,1 % massique, de préférence de 0,001 à 0,05 % massique de composant f), rapporté à la teneur en matières solides ou à la teneur en substances actives exemptes d'eau et de solvants,
de 0,05 à 8 % massique, de préférence de 0,1 à 6 % massique de composant g), rapporté à la teneur en matières solides ou à la teneur en substances actives exemptes d'eau et de solvants,
de 0 à 25 % massique, de préférence de 1 à 15 % massique de composant h), rapporté à la teneur en matières solides, et/ou
de 30 à 80 % massique, de préférence de 40 à 70 % massique d'eau,
les pourcentages en poids des composants se rapportant au poids total de la composition et la somme des composants formant la composition, eau comprise, étant toujours égale à 100,00 % massique.

4. Bande de papier revêtue selon l'une des revendications précédentes, **caractérisée en ce que**,
dans la composition, l'au moins un liant à base d'une dispersion polymère aqueuse représente ou comprend une dispersion de (co)polymère d'acrylate, en particulier une dispersion de copolymère de styrène-acrylate, et/ou **en ce que** l'au moins un antimoussant représente ou comprend un antimoussant à base de polysiloxane, et/ou **en ce que**
l'au moins une base représente ou comprend de l'ammoniac et/ou des sels de celui-ci, et/ou **en ce que**
l'au moins un agent mouillant représente ou comprend un agent mouillant à base de polyéther, et/ou **en ce que**
la cire de polyéthylène oxydée représente ou comprend une cire de polyéthylène HD oxydée.

5. Bande de papier revêtue selon l'une des revendications précédentes, **caractérisée en ce que**
la composition est essentiellement exempte de cires de paraffine et/ou **en ce que** la cire de polyéthylène oxydée et en particulier la composition est essentiellement exemptes d'hydrocarbures liquides ou pâteux non polaires, en particulier à 20 °C, et/ou **en ce que**
la cire de polyéthylène oxydée présente un point de fusion dans la plage de 120 à 135 °C, de préférence dans la plage de 125 à 130 °C.

6. Bande de papier revêtue selon l'une des revendications précédentes, **caractérisée en ce que**
l'au moins un liant à base d'une dispersion polymère aqueuse, en particulier de la dispersion de copolymère de styrène-acrylate est sélectionné parmi le groupe se composant de : styrène- 2-éthylhexyle-acrylate, alpha-méthylstyrène-acrylate, styrène/alpha-méthylstyrène-acrylate, styrène-acrylate, styrène-acrylate/méthacrylate et de sels des susdits composés, en particulier de sels d'ammonium, et/ou **en ce que** l'antimoussant comprend ou représente du polydiméthylsiloxane et/ou du polydiméthylsiloxane modifié, en particulier avec une valeur HLB dans la plage de 1 à 3, et/ou **en ce que**
l'additif comprend des substances neutralisant les odeurs, en particulier sélectionné parmi le groupe se composant de : bicarbonate de sodium, zéolithes, silice, cyclodextrines, en particulier cyclodextrines solubles dans l'eau, par exemple béta-cyclodextrines, composés d'ammonium quaternaire, sels de métaux d'un acide gras non branché ou branché et insaturé ou saturé ainsi que le cas échéant monohydroxylé ou polyhydroxylé avec au moins 16 atomes de carbone, en particulier des sels de métaux, de préférence des sels de zinc, de l'acide ricinoléique, ainsi que le cas échéant des solubilisants et/ou des activateurs des substances neutralisant les odeurs, en particulier sélectionné parmi le groupe se composant de : tensioactifs, en particulier de tensioactifs anioniques, acides aminés, en particulier arginine et/ou lysine, et de mélanges quelconques de ceux-ci.

7. Bande de papier revêtue selon l'une des revendications précédentes, **caractérisée en ce que**,
à l'état non revêtu, ladite bande de papier présente un grammage dans la plage de 50 à 100 g/m², et/ou **en ce que**
l'agent de résistance à l'état humide réticulé est à base de résines polyamido-polyamino-épichlorhydrines, de résines de mélamine et/ou de résines
urée/fonnaldéhyde réticulables oligomères ou polymères cationiques solubles dans l'eau, en particulier dans une teneur dans la plage de 0,5 à 3 % massique, de préférence dans la plage de 1 à 2 % massique (teneur en matières solides), rapporté au poids sec de la bande de papier non revêtue.

8. Bande de papier revêtue selon l'une des revendications précédentes, **caractérisée en ce que**
le revêtement à partir de composition de revêtement de papier aqueuse sur la bande de papier est présent dans une teneur dans la plage de 1,5 à 8 g, et de préférence dans la plage de 2,0 à 5,0 g par mètre carré de bande de papier, rapporté au poids sec de la composition de revêtement de papier.

9. Procédé pour la fabrication d'une bande de papier selon l'une des revendications précédentes, comprenant les étapes
aa) mise à disposition d'une composition aqueuse selon l'une des revendications 1 à 8, en particulier comprenant le sel de métal d'un acide gras non ramifié ou ramifié et insaturé ou saturé ainsi que le cas échéant monohydroxylé ou polyhydroxylé avec au moins 16 atomes de carbone, en particulier des sels de zinc de l'acide ricinoléique,
bb) mise à disposition d'au moins une bande de papier,
cc) application sur un côté ou sur deux côtés de la composition selon aa), en particulier avec un procédé d'impression par rotative à bobines, sur l'au moins une bande de papier selon bb).

10. Sac ou poche, en particulier sac compostable ou poche compostable, formé d'au moins une bande de papier selon l'une des revendications 1 à 8, en particulier comprenant une paroi avant et une paroi arrière ainsi que le cas échéant des parois latérales opposées l'une à l'autre.

11. Sac ou poche selon la revendication 10, **caractérisé en ce que** la bande de papier est revêtue d'un côté et/ou **en ce que** ledit revêtement est présent du côté intérieur.

12. Sac ou poche selon la revendication 10 ou 11, **caractérisé en ce que** ledit sac ou ladite poche sont fabriqués dans la bande de papier essentiellement d'une pièce et/ou **en ce que** des sections se chevauchant de la bande de papier ou des bandes de papier, en particulier dans la zone du fond et/ou dans la zone des parois avant, arrière et/ou latérales, sont collées avec une colle à base aqueuse, en particulier à base d'une dispersion d'acétate de polyvinyle ou à base d'une émulsion d'époxyacrylate, de colle thermofusible ou de colle à base d'amidon, en particulier d'une colle à base aqueuse.

13. Poche selon l'une des revendications 10 à 12, comprenant
au moins une première sangle de maintien montée du côté intérieur sur le revêtement, en particulier sur la paroi avant, en particulier fixée avec une colle thermofusible, et le cas échéant au moins une deuxième sangle de maintien montée du côté intérieur sur le revêtement, en particulier sur la paroi arrière, en particulier fixée avec une colle thermofusible.

14. Poche selon la revendication 13, **caractérisée en ce que**,
la colle thermofusible est à base de : caoutchoucs polyester-uréthane ; caoutchoucs butyle ; caoutchoucs naturels ; copolymères de polyoléfine, en particulier de copolymères d'éthylène-propylène et/ou polyalphaoléfines amorphes, de préférence de copolymères de polyoléfine fabriqués par catalyse avec un métallocène ; copolymères ou polymères séquencés de styrène ; copolymères d'acrylate, en particulier de caoutchoucs d'acrylate et/ou caoutchoucs d'éthylène-acrylate ; copolymère d'éthylène-acétate de vinyle ou mélanges quelconques de ceux-ci.

15. Poche selon l'une des revendications 12 à 14, **caractérisée en ce que** la colle à base d'eau, en particulier sous la forme d'une dispersion, comprend ou représente un mélange d'au moins un copolymère d'acrylate et d'au moins un copolymère d'éthylène-acétate de vinyle, en particulier avec une teneur d'acétate de vinyle dans la plage de 40 à 90 % massique, ou un mélange d'au moins un copolymère ou copolymère séquencé de styrène, en particulier sélectionné parmi le groupe se composant de : copolymère ou copolymère séquencé de styrène-isoprène-styrène (SIS), styrène-butadiène-styrène (SBS) et styrène-éthylène-butadiène-styrène (SEBS), et comprend ou représente au moins un copolymère d'éthylène-acétate de vinyle, et/ou **en ce que** des sections se chevauchant de la bande de papier ou des bandes de papier dans la zone de fond sont collées avec la colle à base aqueuse.

16. Sac ou poche selon l'une des revendications 10 à 15, **caractérisé en ce que** la colle thermofusible comprend en outre au moins une résine adhésive et le cas échéant au moins un plastifiant, en particulier une huile plastifiante paraffinique, naphténique et/ou aromatique et/ou un plastifiant de type ester, et/ou au moins un additif, en particulier sélectionné parmi le groupe se composant de : conservateurs, colorants et/ou additifs anti-statiques.

17. Sac ou poche selon la revendication 16, **caractérisé en ce que** l'au moins une résine adhésive est sélectionnée parmi le groupe se composant de : résines d'ester de colophane, en particulier résines d'ester de colophane totalement ou partiellement hydrogénées ; dérivés maléinisés des susdites résines d'ester de colophane ; résines d'ester d'abiétane ; résines naturelles modifiées, en particulier acides résiniques de résine balsamique, d'huile de tall ou de résine de bois ; résines de terpène modifiées, de préférence copolymères ou terpolymères de terpène, en particulier de préférence terpènes de styrène, terpènes d'alpha-méthylstyrène, résines de terpène modifiées par un phénol ou dérivés hydrogénés de ceux-ci ; copolymères d'acide acrylique ; résines d'hydrocarbures aromatiques, aliphatiques ou cycloaliphatiques, en particulier résines d'hydrocarbures de type C5/C9 ; dérivés modifiés ou hydrogénés de ceux-ci ; et mélanges quelconques de ceux-ci et/ou **en ce qu'**au moins un plastifiant est sélectionné parmi le groupe se composant de : esters d'alkyle d'acides carboxyliques aliphatiques ou aromatiques, en particulier adipates, sébaçates, phtalates, citrates, benzoates ou mellitates, sulfonates aromatiques, polyalkylèneglycoles, en particulier polypropylèneglycole ou polybutylèneglycole, plastifiants à base d'huile minérale, en particulier d'huile blanche, et mélanges de ceux-ci.

18. Utilisation du sac ou de la poche selon l'une des revendications 10 à 17 comme sac-poubelle ou poche-poubelle, en particulier pour la réception de déchets compostables, en particulier de déchets de cuisine.
